(19) **Europäisches Patentamt / European Patent Office / Office européen des brevets**

(11) **EP 3 797 547 B1**

(12) **FASCICULE DE BREVET EUROPEEN**

(45) Date de publication et mention de la délivrance du brevet:
**07.12.2022 Bulletin 2022/49**

(21) Numéro de dépôt: **19732071.6**

(22) Date de dépôt: **25.06.2019**

(51) Classification Internationale des Brevets (IPC):
**H04W 36/00** *(2009.01)*   **H04W 36/30** *(2009.01)*
**H04W 84/12** *(2009.01)*

(52) Classification Coopérative des Brevets (CPC):
**H04W 36/30; H04W 36/0085;** H04W 36/00837;
**H04W 84/12**

(86) Numéro de dépôt international:
**PCT/EP2019/066911**

(87) Numéro de publication internationale:
**WO 2020/002376 (02.01.2020 Gazette 2020/01)**

(54) **PROCÉDÉ DE GESTION D'UNE CONNEXION DANS UN RÉSEAU SANS FIL DISTRIBUÉ**

VERFAHREN ZUR VERWALTUNG EINER VERBINDUNG IN EINEM VERTEILTEN DRAHTLOSEN NETZWERK

METHOD FOR MANAGING A CONNECTION IN A DISTRIBUTED WIRELESS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2018 FR 1855829**

(43) Date de publication de la demande:
**31.03.2021 Bulletin 2021/13**

(73) Titulaire: **SAGEMCOM BROADBAND SAS**
**92500 Rueil-Malmaison (FR)**

(72) Inventeurs:
• **FAYE, Stanislas**
  **92500 Rueil Malmaison (FR)**
• **ZAOUIA, Farid**
  **92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2017 135 104    US-A1- 2018 084 471**
**US-B1- 8 089 939    US-B1- 9 538 446**

**Description**

La présente invention concerne le domaine des réseaux de communications sans fil conformes à l'une des normes IEEE 802.11 (« *Institute of Electrical and Electronics Engineers* » en anglais), c'est-à-dire celui des réseaux de communication sans fil communément appelés réseaux « *Wi-Fi* ». La présente invention concerne plus particulièrement un procédé de gestion de la connexion d'un nœud client à un nœud de collecte dans un réseau Wi-Fi distribué.

Un réseau de communication sans fil (ci-après « réseau ») conforme à l'une des normes IEEE 802.11 comprend typiquement une pluralité de nœuds. Chaque nœud est un dispositif électronique comprenant *a minima* un module radiofréquence permettant l'établissement de communications conformément à l'une des normes IEEE 802.11, ou dit autrement, conformément à l'une des normes Wi-Fi. Un tel réseau comprend typiquement un nœud ou dispositif électronique dit maître, communément appelé point d'accès (« *Access Point* » en anglais, ou « *AP* ») et une pluralité de nœuds ou dispositifs électroniques dits utilisateurs (ou clients) pouvant établir des connexions sans fil avec le point d'accès et/ou entre elles. Dans un environnement résidentiel, le dispositif électronique maître, ou point d'accès, est typiquement une « *box* » fournie par un opérateur Internet, c'est-à-dire une passerelle domestique (« *home gateway* », ou « *residential gateway* », en anglais). Les dispositifs électroniques utilisateurs sont typiquement des ordinateurs, télévisions, tablettes ou téléphones dits « *intelligents* » (« *smartphone* » en anglais). On dit ainsi communément que les dispositifs électroniques utilisateurs sont associés ou connectés « en Wi-Fi » avec le point d'accès.

L'architecture d'un réseau Wi-Fi peut aussi être une architecture dite distribuée, afin par exemple d'étendre la portée du réseau sans fil ou d'augmenter ses performances, par l'utilisation d'une pluralité de points d'accès. L'architecture d'un réseau Wi-Fi distribuée comprend typiquement deux réseaux :

- un premier réseau dit de collecte ou d'infrastructure (« *backhaul* » en anglais), permettant de relier les points d'accès entre eux et de constituer une infrastructure réseau suivant une architecture réseau de type mixte étoile et/ou chaîne, ce réseau de collecte pouvant être un réseau sans-fil (par exemple Wi-Fi), un réseau filaire (par exemple Ethernet) ou un mélange des deux,
- un deuxième réseau dit utilisateur (ou client) (« *fronthaul* » en anglais), permettant une connexion sans fil de nœuds (ou dispositifs électroniques) dits utilisateurs (ou clients, ou encore station) au réseau Wi-Fi distribué.

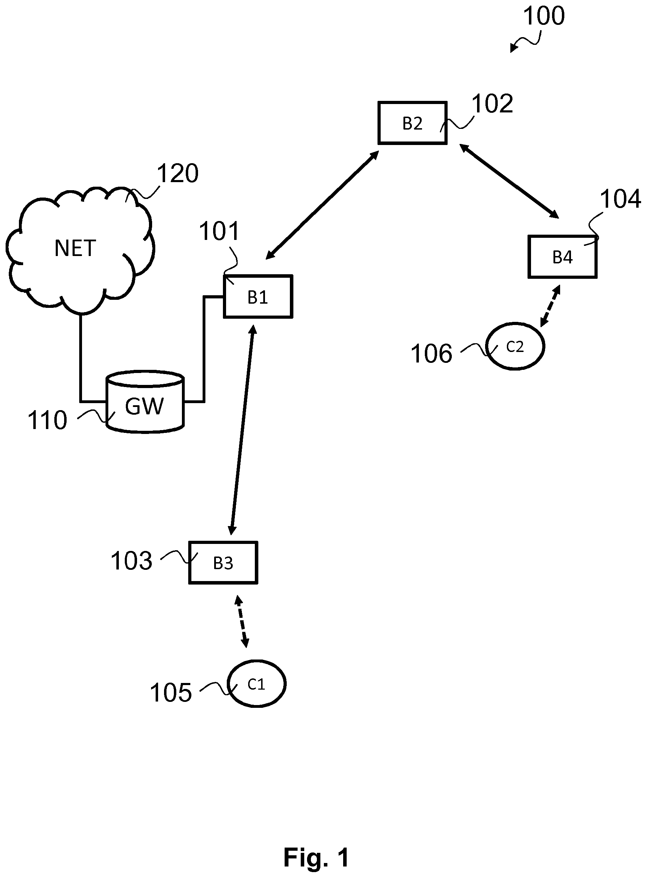

La **Fig. 1** illustre de façon très schématique un tel réseau Wi-Fi distribué 100. Le réseau distribué 100 comprend une passerelle 110 (ou « *gateway* » en anglais) et une pluralité de nœuds ou dispositifs électroniques B1 101, B2 102, B3 103, B4 104, C1 105 et C2 106. La passerelle 110 permet une interconnexion du réseau 100 avec un réseau 120, par exemple le réseau Internet. Dans cet exemple, les nœuds B1, B2, B3 et B4 sont des nœuds dits de collecte. Ces nœuds B1, B2, B3 et B4 constituent l'infrastructure de collecte (« *backhaul* ») du réseau 100. Les nœuds C1 et C2 sont deux nœuds clients connectés à des nœuds de collecte (respectivement les nœuds B3 et B4). Les nœuds de collecte B1, B2, B3 et B4 gèrent typiquement deux réseaux Wi-Fi :

- un premier réseau Wi-Fi, dédié à la collecte, permet une connexion de chaque nœud de collecte au réseau distribué 100, possiblement de façon chaînée,
- un deuxième réseau Wi-Fi est dédié à la connexion des nœuds clients à l'un ou l'autre des nœuds de collecte, de façon similaire à un réseau Wi-Fi non distribué.

Dans l'exemple illustré dans la Fig. 1, le nœud B1 101 est connecté de façon filaire à la passerelle GW 110, par exemple via une connexion Ethernet. Selon un mode de réalisation, la connexion entre la passerelle GW 110 et le nœud B1 101 peut être réalisée par une connexion Wi-Fi. Selon un mode de réalisation, la passerelle GW 110 et le nœud B1 101 sont un seul et même dispositif électronique, ledit dispositif électronique comprenant les fonctionnalités de la passerelle GW 110 et du nœud B1 101.

Chaque nœud de collecte B1, B2, B3 ou B4 peut donc possiblement établir une connexion vers un autre nœud de collecte afin de constituer l'infrastructure de collecte du réseau distribué 100. Il est à noter que, selon un mode de réalisation, certains nœuds de collecte peuvent être connectés via une liaison filaire, par exemple de type Ethernet, au réseau d'infrastructure.

Un nœud utilisateur, tel le nœud utilisateur C1 ou le nœud utilisateur C2, peut donc potentiellement établir une connexion sans fil avec l'un ou l'autre des nœuds de collecte B1, B2, B3 ou B4. Typiquement, un nœud client cherche à établir une connexion sans fil avec le nœud de collecte qui émet un signal radio le plus fort. Dit autrement, un nœud client cherche à établir une connexion sans fil avec un nœud de collecte parmi la pluralité de nœuds de collecte disponibles, le nœud de collecte correspond au nœud de collecte dont le signal radio est reçu avec la plus forte puissance par le nœud client.

Ce choix n'est souvent pas le choix optimal du point de vue du réseau de communication distribué. En effet, le nœud de collecte choisi par un nœud client pour se connecter peut certes être celui-ci offrant une meilleure qualité de réception du signal radio, mais ce nœud de collecte peut être par ailleurs surchargé en termes de nombre de nœuds clients déjà connectés ou de trafic de collecte transitant par ce nœud. Il pourrait être optimal dans ce cas que le nœud client se connecte à un autre nœud de collecte moins chargé même si ce dernier offre *a priori* une moins bonne qualité de signal radio.

Plus prosaïquement, le nœud client est seul décideur du nœud de collecte utilisé pour se connecter au réseau, il n'est pas possible d'établir pour un réseau de communication sans fil distribué de stratégie centralisée de connexion des nœuds clients aux différents nœuds de collecte.

Le brevet US 9 538 446 divulgue l'itinérance de station dans un réseau Wi-Fi géré dans le cloud.

La demande de brevet US 2017/135104 divulgue Un réseau dédié pour la couverture de toute une maison qui applique diverses techniques d'optimisation.

Il est donc nécessaire de proposer un procédé permettant de pallier ces inconvénients.

L'invention concerne un procédé, un nœud de gestion, un programme et support d'enregistrement tels que définis par les revendications indépendantes.

D'autres aspects de la présente invention sont définis par les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la **Fig. 1** illustre schématiquement l'architecture d'un réseau de communication sans fil distribué comprenant une pluralité de nœuds, par exemple conforme à une norme IEEE 802.11,
- la **Fig. 2** illustre schématiquement un procédé de gestion d'une connexion d'un nœud client à un réseau de communication sans fil distribué, selon un premier mode de réalisation non couvert par la présente invention,
- la **Fig. 3** illustre schématiquement un procédé de gestion d'une connexion d'un nœud client à un réseau de communication sans fil distribué, selon un deuxième mode de réalisation selon la présente invention,
- la **Fig. 4** illustre schématiquement l'architecture matérielle d'un nœud de collecte d'un réseau de communication sans fil distribué, le nœud de collecte étant adapté pour exécuter tout ou partie des étapes des procédés illustrés dans la Fig. 2 ou dans la Fig. 3.

L'invention permet de pallier le manque de fonctionnalité de type « transfert de connexion » (ou « *handover* » en anglais) dans un réseau typique de type Wi-Fi. L'invention permet de déterminer s'il est nécessaire de transférer une connexion d'un nœud client établie avec un premier nœud de collecte vers un autre nœud de collecte. Si c'est le cas, l'invention divulgue un procédé permettant de sélectionner un autre nœud de collecte plus adapté à la connexion du nœud client, selon une variété de critères ne se limitant pas à la seule puissance d'un signal radio reçu. L'invention permet finalement de réaliser le transfert de la connexion entre le nœud client et le premier nœud de collecte vers un deuxième nœud de collecte. Avantageusement, l'invention concerne un procédé adapté aussi bien à des nœuds clients conforme à une norme IEEE 802.11k et/ou IEEE 802.11v qu'à des nœuds n'étant pas conformes à ces deux normes.

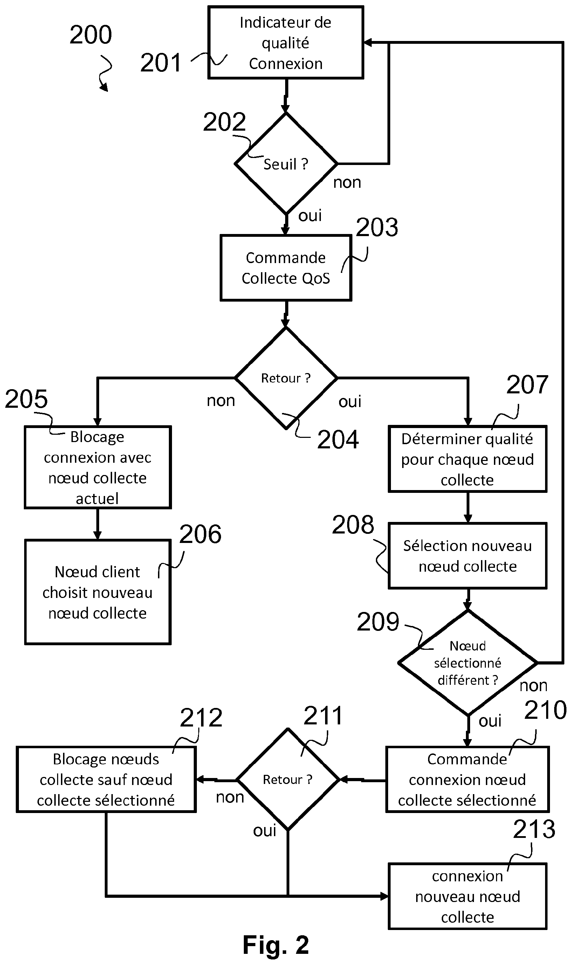

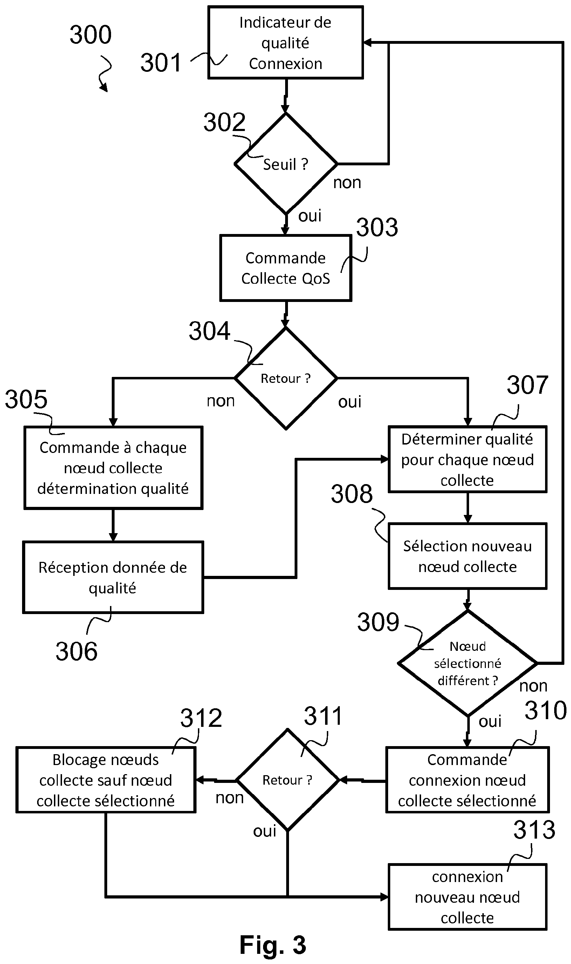

Dans les procédés 200 et 300 illustrés ci-après dans la Fig. 2 et la Fig. 3, le réseau 100 comprend un nœud dit de gestion. Les fonctions dudit nœud de gestion peuvent être intégrées dans l'un des nœuds de collecte du réseau 100, par exemple le nœud dit central B1 101 ou bien être intégrées dans un dispositif électronique dédié du réseau 100. Selon un autre mode de réalisation de l'invention, ces fonctions peuvent être intégrées dans la passerelle 110.

La **Fig. 2** illustre schématiquement un procédé 200 de gestion d'une connexion d'un nœud client, par exemple le nœud client C1 ou C2 de la Fig. 1, à un réseau de communication sans fil distribué, par exemple le réseau 100, selon un premier mode de réalisation non couvert par la présente invention.

Le procédé 200 est exécuté par un nœud de gestion du réseau 100, le nœud de gestion étant possiblement l'un ou l'autre des nœuds de collecte du réseau 100. Possiblement, chaque nœud de collecte peut prendre le rôle de nœud de gestion. Le réseau 100 peut alors comprendre un procédé pour déterminer lequel des nœuds de collecte doit prendre les fonctionnalités de nœud de gestion.

Le procédé 200 est possiblement exécuté périodiquement pour chacune des connexions des nœuds client du réseau 100 afin de vérifier régulièrement s'il est nécessaire de transférer une connexion existante d'un nœud client sur un nœud de collecte vers un autre nœud de collecte. Alternativement ou de façon complémentaire, le procédé 200 peut être déclenché par un évènement prédéterminé, par exemple lors de la connexion d'un nouveau nœud client au réseau, lorsqu'un nœud de collecte détermine qu'il est en surcharge, etc.

Possiblement, chaque nœud de collecte détermine, périodiquement, des données de qualité associées à chacune des connexions de nœud client établies avec ledit nœud de collecte. Ces données de qualité, associées à chaque connexion d'un nœud client à un nœud de collecte, peuvent comprendre des données de qualité de type :

- puissance en réception d'un signal radio reçu d'un nœud client connecté au nœud de collecte (ou « RSSI » pour « *Received Signal Strength Indication* » en anglais),

- débit de transmission bas niveau (ou de la couche physique) d'une connexion établie avec un nœud client (ou « *PhyRate* » pour « *Physical rate* » en anglais),
- temps d'utilisation de la connexion par le nœud client (ou « *air time usage* » en anglais), ce temps d'utilisation de la connexion correspond à une donnée de qualité appelée ci-après « *airTimeUsage* ».
- nombre de trames transmises après une ou plusieurs retransmissions (« Frame retries » en anglais).

Chaque nœud de collecte du réseau 100 peut être connecté à un bus de communication, par exemple un bus de communication logiciel sécurisé tel que décrit dans la demande de brevet WO 2013/087894 A1 publiée le 20 juin 2013. Ainsi, les nœuds de collecte peuvent périodiquement s'échanger les données de qualités collectées par chaque nœud de collecte et constituer une base de données distribuée ou répliquée par chaque nœud de collecte comprenant, pour chaque nœud de collecte, toutes les données qualités collectées.

Dans une première étape 201, le nœud de gestion détermine un indicateur de qualité de connexion associé à un nœud client connecté à un premier nœud de collecte, l'indicateur de qualité de connexion étant représentatif d'une qualité de la connexion entre le premier nœud de collecte et le nœud client. Dit autrement, le nœud de gestion, pour chaque connexion établie dans le réseau 100, ou sur une sélection de ces connexions, détermine un indicateur de qualité associé à la connexion. Selon un mode de réalisation de l'invention, cet indicateur de qualité, dit « ScoreStation », peut être déterminé selon la formule suivante pour une connexion donnée :

$$ScoreStation = coef1 \text{ x } RSSI + coef2 \text{ x } PhyRate,$$

avec :

« ScoreStation » : indicateur de qualité d'une connexion entre un nœud client et un nœud de collecte,
« coef1 » : premier coefficient de pondération,
« coef2 » : deuxième coefficient de pondération,
« RSSI » : puissance en réception d'un signal radio émis par le nœud client et reçu par le premier nœud de collecte,
« PhyRate » : débit de transmission bas niveau de la connexion.

Selon un mode de réalisation de l'invention, les coefficients de pondération « *coef1* » et « *coef2* » peuvent être prédéterminés. Selon un autre mode de réalisation de l'invention, les coefficients de pondération « *coef1* » et « *coef2* » sont déterminés par les formules :

(1) si la connexion est active, c'est-à-dire que le nœud client échange des données avec le nœud de collecte, alors la donnée de qualité « *airTimeUsage* » est positive et :

$$Coef1 = Coef2 = PhyRateTreshold / RSSITreshold,$$

avec :

« *PhyRateTreshold* » : valeur prédéterminée du débit de transmission bas niveau de la connexion, typiquement choisie dans la plage [26 ; 52],
« *RSSITreshold* » : valeur prédéterminée de la puissance en réception d'un signal radio émis par le nœud client et reçu par le premier nœud de collecte, typiquement choisie dans la plage [-80 ; -65].

(2) si la connexion est inactive, c'est-à-dire que le nœud client n'échange pas de données avec le nœud de collecte (dit autrement, le nœud client est en « sommeil »), alors la donnée de qualité « *airTimeUsage* » est nulle et :

$$Coef1 = 1 / RSSITreshold,$$

et, *Coef2 = 0.*

La pondération des coefficients Coef1 et Coef2 permet de couvrir les cas où le nœud client est actif ou bien en sommeil.
La valeur du paramètre « *RSSITreshold* » étant ici choisie dans une plage de valeurs négatives, les coefficients « Coef1 » et « Coef2 » sont donc négatifs. Ainsi, une dégradation de la qualité de connexion se traduit-elle par une augmentation de la valeur de l'indicateur de qualité « ScoreStation ».

Ainsi, lors de cette première étape 201, le nœud de gestion détermine un indicateur de qualité, par exemple l'indicateur de qualité « *ScoreStation* » décrit ci-avant, associé à la connexion du nœud client avec le premier nœud de collecte.

Dans une étape suivante 202, le nœud de gestion détermine si l'indicateur de qualité de connexion déterminé lors de l'étape précédente est supérieur à un seuil prédéterminé, ce seuil dépassé étant représentatif d'une mauvaise qualité de la connexion. Dit autrement, lors de cette étape 202, le nœud de gestion détermine si l'indicateur de qualité déterminé lors de l'étape 201 est indicateur d'une mauvaise qualité de connexion ou non. Pour cela, un seuil de qualité minimale est prédéfini.

Dans le cas de l'utilisation de l'indicateur de qualité « *ScoreStation* » précédemment décrit, et selon un mode de réalisation de l'invention, le seuil de qualité minimale, ci-après « *ScoreTreshold* », est variable et déterminé ainsi :

Si *airTimeUsage* = 0, alors *ScoreTreshold* = 1, ou,
Si *airTimeUsage* > 0, alors *ScoreTreshold* = k, avec k < 1.

Ainsi, la valeur du seuil de qualité minimale est déterminée en fonction de l'activité du nœud client.

Ainsi, si l'indicateur de qualité de connexion déterminé lors de l'étape précédente est supérieur à un seuil prédéterminé, ou bien déterminé selon les formules décrites ci-avant, le nœud de gestion détermine que la qualité de connexion entre le nœud client et le premier nœud de collecte n'est pas satisfaisante et qu'il est nécessaire de poursuivre le procédé dans une étape 203 afin de possiblement sélectionner un meilleur nœud de collecte pour établir une nouvelle connexion. Si au contraire, le nœud de gestion détermine, lors de l'étape 202, que la qualité de la connexion est satisfaisante, alors le nœud de gestion peut arrêter le procédé 200 ou bien reprendre l'étape 201, celle-ci pouvant être alors exécutée périodiquement. Il n'est pas dans ce cas nécessaire de transférer la connexion vers un autre nœud de collecte.

Dans une étape 203, le nœud de gestion ayant déterminé lors de l'étape 202 que la qualité de la connexion est insatisfaisante, le nœud de gestion émet, à destination du nœud client, une commande de détermination de données qualités associées à chaque nœud de collecte. Dit autrement, le nœud de gestion émet une commande à destination du nœud client afin que ce dernier collecte des données de qualités associées aux nœuds de collecte. Ainsi, le nœud client peut, pour chaque nœud de collecte, déterminer des données de qualité associées à ce nœud de collecte. La commande de détermination de données qualités associées à chaque nœud de collecte est typiquement une commande comprise dans le protocole IEEE 802.11k. Par conséquent, le nœud client, s'il n'est pas compatible ou conforme avec la norme IEEE 802.11k, peut ne pas savoir comment interpréter la commande reçue et, dans ce cas, l'ignorer ou répondre par un message d'erreur. Dans ce cas, le nœud de gestion passe à l'étape 205. Si au contraire le nœud client sait correctement interpréter et répondre à la commande envoyée lors de l'étape 203, le nœud de gestion passe à l'étape 207.

L'étape 205 correspond au cas d'un nœud client ne pouvant pas interpréter la commande reçue lors de l'étape 203, et, *in fine,* ne pouvant donc pas collecter de données de qualité des nœuds de collecte. Dans ce cas, le nœud de gestion ne peut pas déterminer ou sélectionner un meilleur nœud de collecte pour établir la connexion avec le nœud client, la charge de déterminer cet éventuel nœud de collecte est donc laissée au nœud client par des mécanismes habituels. L'étape 205 comprend donc l'émission, par le nœud de gestion, et à destination du premier nœud de collecte, d'une commande de blocage des connexions du nœud client (ou commande de refus de connexion). Dit autrement, le nœud de gestion envoie une commande, à destination du premier nœud de collecte, de blocage (ou « *blacklisting* » en anglais) du nœud client. A réception de cette commande, le premier nœud de collecte déauthentifie et/ou désassocie, ou dit autrement déconnecte, le nœud client, et refuse ensuite, possiblement pour un temps prédéterminé, toute demande de reconnexion de la part du nœud client. Le nœud client, ne pouvant plus se connecter au premier nœud client, choisit, dans une étape 206, un nouveau nœud de collecte pour se connecter, la sélection s'opérant selon un procédé connu.

Il est à noter que dans le cas ou plusieurs bandes de fréquence peuvent être utilisées (« *band steering* » en anglais), le blocage (étape 205) peut ne concerner qu'une seule bande de fréquence, celle qui est utilisée initialement pour l'établissement de la connexion. Le nœud client peut donc éventuellement être amené à se reconnecter au premier nœud de collecte lors de l'étape 206, mais alors en utilisant une autre bande de fréquence. A l'issue de de l'étape 206, le nœud client est donc connecté à un nouveau nœud de collecte, ce nouveau nœud de collecte n'a toutefois pas été sélectionné par le nœud de gestion mais par le seul nœud client selon un procédé connu.

L'étape 207 correspond au cas où le nœud client sait interpréter et répondre à la commande émise par le nœud de gestion lors de l'étape 203. Dit autrement, cette étape correspond à un nœud client compatible ou conforme avec le protocole IEEE 802.11k.

Lors de cette étape 207, comme décrit dans le protocole IEEE 802.11k, le nœud client peut collecter des données qualités des nœuds de collecte en fonction des signaux radio captés par le nœud client, et ensuite émettre à destination du nœud de gestion un rapport contenant des données qualités associées à chaque nœud de collecte. Le nœud de gestion reçoit ce rapport et peut déterminer, pour chaque nœud de collecte un indicateur de qualité, cet indicateur de qualité étant représentatif d'une qualité potentielle de connexion entre ledit nœud de collecte et le nœud client. Ces données qualités sont associées à un identifiant propre à chaque nœud de collecte (par exemple une adresse de type « MAC » - « *Media Access Control* » en anglais).

L'indicateur de qualité peut être déterminé en fonction des données qualités collectées puis émises par le nœud client, par exemple un indicateur de type « *RSSI* » associé à chaque nœud de collecte.

Le nœud de gestion peut aussi combiner les données qualités reçues lors de l'étape 207 avec d'autres données qualités collectées par ailleurs directement ou indirectement auprès des nœuds de collecte. Ces données qualités associées aux nœuds de collecte peuvent comprendre le taux de charge du nœud de collecte, l'utilisation d'une bande passante disponible ou toute autre donnée qualité associée à un nœud de collecte. Dit autrement, l'indicateur de qualité, associé à chaque nœud de collecte, peut être déterminé par le nœud de gestion en fonction de données qualités reçues lors de l'étape 207, issues de mesures réalisées par le nœud client, mais aussi de données qualités propres au réseau de collecte.

Dans une étape suivante 208, le nœud de gestion sélectionne le meilleur nœud de collecte pour établir une nouvelle connexion avec le nœud client en fonction des indicateurs de qualité précédemment déterminés (étape 207).

Dans une étape suivante 209, si ce nœud de collecte se révèle être le premier nœud, alors il n'est pas nécessaire de transférer la connexion du nœud client vers un nouveau nœud de collecte, le procédé repasse, possiblement après une période de pause, à l'étape initiale 201 afin de pouvoir réagir à toute variation de la qualité de la connexion.

Dans l'étape 209, si le nœud de collecte sélectionné lors de l'étape 208 est un deuxième nœud de collecte différent du premier nœud de collecte, alors le procédé passe à l'étape 210.

Dans l'étape 210, le nœud de gestion émet à destination du nœud client une commande de connexion au deuxième nœud de collecte, la commande comprenant un identifiant du deuxième nœud de collecte. Cette commande est typiquement une commande décrite dans le protocole IEEE 802.11v.

Selon que le nœud client soit conforme ou compatible avec le protocole IEEE 802.11v, ce nœud client, dans une étape 211, peut émettre une réponse conforme ou non avec la commande émise par le nœud de gestion lors de l'étape 210. Dit autrement, si le nœud client sait interpréter et répondre à la commande de connexion au deuxième nœud de collecte, alors le nœud client met fin à la connexion avec le premier nœud de collecte et établit une connexion avec le deuxième nœud de collecte dans une étape 213.

Dans le cas contraire, alors le nœud de gestion émet, à destination de chaque nœud de collecte du réseau de communication distribué, sauf le deuxième nœud de collecte, une commande de refus d'association avec le nœud client (ou de blocage ou de « *blacklisting* » en anglais). Ainsi, chaque nœud, y compris le premier nœud de collecte, refusant toute demande de connexion en provenance du nœud client, ce dernier n'a d'autre choix, dans l'étape 213, que de se connecter au deuxième nœud de collecte.

Ainsi, pour un nœud client conforme ou compatible avec le protocole 802.11k, le procédé 200 permet au réseau, c'est-à-dire au nœud de gestion, de sélectionner un nœud de collecte optimal pour établir une connexion avec le nœud client.

Dans le cas où le nœud client n'est pas conforme ou compatible avec le protocole 802.11k, alors le procédé 200 laisse le nœud client sélectionner seul un nouveau nœud de collecte (étape 206) lorsqu'il est jugé (étape 202) que la qualité de connexion avec le premier nœud de collecte est insatisfaisante.

La **Fig. 3** illustre schématiquement un procédé 300 de gestion d'une connexion d'un nœud client à un réseau de communication sans fil distribué, selon un deuxième mode de réalisation selon la présente invention.

Le procédé 300 débute de façon identique au procédé 200, les étapes 301 à 304 étant respectivement identiques aux étapes 201 à 204.

Le cas où le nœud client est conforme ou compatible avec le protocole IEEE 802.11k, c'est-à-dire la branche du procédé 300 comprenant les étapes 307 à 313 est identique à la branche du procédé 200 comprenant les étapes correspondantes 207 à 213.

Par contre, dans le procédé 300, le cas où le nœud client n'est pas conforme ou compatible avec le protocole IEEE 802.11k, c'est-à-dire la branche comprenant les étapes 305 et 306, diffère de la branche correspondante (étapes 205 et 206) du procédé 200.

En effet, les étapes 305 et 306 concernent des étapes palliatives permettant au réseau 100, c'est-à-dire au nœud de gestion, de déterminer *in fine* un meilleur nœud de collecte. Dit autrement, contrairement au procédé 200, ce n'est pas dans ce cas le nœud client seul qui sélectionne le nœud de collecte pour établir une nouvelle connexion. Au contraire, dans le procédé 300, c'est le nœud de gestion qui sélectionne *in fine* le nœud de collecte.

Pour cela, dans une étape 305, le nœud de gestion émet, à destination de chaque nœud de collecte, sauf le premier nœud de collecte, une commande d'activation de détermination d'une donnée qualité associée au nœud client et audit nœud de collecte, la commande comprenant un identifiant du nœud client.

Ainsi, chaque nœud de collecte, comprenant au moins un module radio conforme à une norme IEEE 802.1, recevant cette commande d'activation est adapté pour déterminer une donnée qualité associée à un nœud client identifié par l'identifiant. Pour cela, chaque nœud de collecte est adapté pour :

- passer le module radio en un mode dit surveillance afin de capturer des trames comprenant l'identifiant du nœud client, et/ou,
- filtrer des trames reçues en fonction de l'identifiant du nœud client.

La donnée qualité peut correspondre à une puissance reçue d'un signal radio correspondant à des trames émises par le nœud client et capturées ou reçues par le nœud de collecte, par exemple un RSSI.

Selon un mode de réalisation de l'invention, si le nœud client est en sommeil, c'est-à-dire n'utilise pas sa connexion - et n'émet donc pas de trames capturables par les nœuds de collecte -, alors le nœud de gestion, ou l'un des nœuds de collecte, peut activer ledit nœud client en envoyant des messages prédéterminés (par exemple des messages dits « *pings* »)

Dit autrement, lors de l'étape 305, le nœud client n'étant pas compatible ou conforme avec le protocole IEEE 802.11k, et ne pouvant donc collecter des données qualités associées aux nœuds de collecte, il est donc demandé aux nœuds de collecte de collecter eux des données qualités associées au nœud client. Le procédé 300 est donc compatible avec tout dispositif électronique ou nœud Wi-Fi dit « *legacy* » (en anglais), c'est-à-dire n'intégrant pas les dernières révisions IEEE 802.11k ou 802.11v des normes Wi-Fi (ou IEEE 802.11).

Lors de l'étape suivante 306, le nœud de gestion reçoit donc, en provenance de chaque nœud de collecte, un message comprenant la donnée qualité associée au nœud client et audit nœud de collecte. Le nœud de gestion peut alors exécuter l'étape 307, des données de qualité ayant été reçues, et déterminer des indicateurs de qualité pour chaque nœud de collecte. Dans le procédé 300, contrairement au procédé 200, l'étape 307 permettant de déterminer, pour chaque nœud de collecte, un indicateur de qualité associé au nœud client en fonction de la donnée qualité reçue, peut être exécutée, que le nœud client soit conforme ou compatible avec le protocole IEEE 802.11k (étapes 304 puis 307) ou non (étapes 304, 305, 306 et 307).

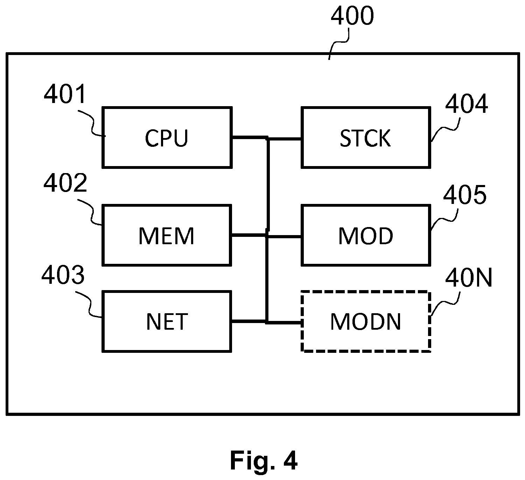

La **Fig.4** illustre schématiquement l'architecture matérielle d'un dispositif électronique ou nœud de gestion d'un réseau de communication sans fil distribué, le nœud de gestion pouvant être l'un des nœuds de collecte B1, B2, B3, B4 ou B5 illustrés dans la Fig. 1, et étant adapté pour exécuter tout ou partie des étapes du procédé 200 ou 300 illustré dans la Fig. 2 ou dans la Fig. 3.

Ainsi, le dispositif électronique 400 comprend, reliés par un bus de communication : un processeur ou CPU (« *Central Processing Unit* » en anglais) 401 ; une mémoire MEM 402 de type RAM (« *Random Access Memory* » en anglais) et/ou ROM (« *Read Only Memory* » en anglais), possiblement un module réseau NET 403, par exemple de type Ethernet, un module de stockage STCK 404 de type stockage interne et possiblement une pluralité de modules radiofréquence 405 à 40N conformes à une norme de type IEEE 802.11. Le module de stockage STCK 404 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 401 peut enregistrer des données, ou informations, dans la mémoire MEM 402 ou dans le module de stockage STCK 404. Le processeur CPU 401 peut lire des données enregistrées dans la mémoire MEM 402 ou dans le module de stockage STCK 404. Ces données peuvent correspondre à des paramètres de configuration. Le module réseau NET 503, si présent, permet typiquement la connexion du dispositif électronique 400 à un réseau local et/ou Internet. Chaque module radiofréquence 405 à 40N permet au dispositif électronique 400 d'établir une pluralité d'interfaces radiofréquence conforme à une norme dite Wi-Fi. La norme Wi-Fi peut être la norme IEEE 802.11k et/ou la norme IEEE 802 .11v. Une interface radiofréquence peut être un point d'accès Wi-Fi, ou au contraire une interface radiofréquence dite utilisateur permettant une association à une interface radiofréquence dite point d'accès d'un autre dispositif électronique.

Le processeur CPU 401 est capable d'exécuter des instructions chargées dans la mémoire MEM 402, par exemple à partir du module de stockage STCK 404. Lorsque le dispositif électronique 400 est mis sous tension, le processeur CPU 401 est capable de lire de la mémoire MEM 402 des instructions et de les exécuter. Ces instructions forment un programme d'ordinateur causant la mise en œuvre, par le processeur CPU 401, de tout ou partie des procédés et étapes décrits ci-avant, particulièrement le procédé décrit dans la Fig. 2 ou le procédé décrit dans la Fig. 3. Ainsi, tout ou partie des procédés et étapes décrits ci-avant peut être implémenté sous forme logicielle par exécution d'un ensemble d'instructions par une machine programmable, telle qu'un DSP (« *Digital Signal Processor* » en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array* » en anglais) ou un ASIC (« *Application-Specific Integrated Circuit* » en anglais). Les fonctions du dispositif électronique 400 peuvent être intégrées dans un nœud d'un réseau sans fil conforme à une norme 802.11 IEEE par une mise à jour d'un logiciel, c'est-à-dire par exemple par mise à jour du microprogramme (« *firmware* » en anglais) du dispositif électronique 400.

**Revendications**

**1.** Procédé (300), pour un réseau de communication sans fil distribué (100) comprenant une pluralité de nœuds de collecte (B1, B2, B3, B4) et au moins un nœud client (C1, C2) connecté à un premier nœud de collecte, de gestion de la connexion de ce nœud client, le procédé étant exécuté par un nœud dit de gestion (B1, B2, B3, B4) et comprenant les étapes de :

- déterminer (301) un indicateur de qualité de connexion associé au nœud client, l'indicateur de qualité de connexion étant représentatif d'une qualité de la connexion entre le premier nœud de collecte et le nœud client,

si l'indicateur de qualité de connexion est supérieur à un seuil prédéterminé (302), ce seuil dépassé étant représentatif d'une mauvaise qualité de la connexion, alors :

- émettre (303) à destination du nœud client une commande de détermination des données qualités associées à chaque nœud de collecte,
- émettre (305) en l'absence d'acceptation par le nœud client de la commande de détermination des données qualités associées à chaque nœud de collecte, à destination de chaque nœud de collecte, sauf le premier nœud de collecte, une commande d'activation de détermination d'une donnée qualité associée au nœud client et à chaque nœud de collecte, la commande comprenant un identifiant du nœud client,
- recevoir (306) en l'absence d'acceptation par le nœud client de la commande de détermination des données qualités associées à chaque nœud de collecte, en provenance de chaque nœud de collecte, un message comprenant la donnée qualité associée au nœud client et audit chaque nœud de collecte,
- déterminer (307), pour chaque nœud de collecte, un indicateur de qualité associé au nœud client en fonction de la donnée qualité reçue,
- sélectionner (308) un deuxième nœud de collecte en fonction des indicateurs de qualité déterminés, et,

**caractérisé en ce que** si le deuxième nœud de collecte est différent du premier nœud de collecte (309), alors :

- émettre (310) à destination du nœud client une commande de connexion au deuxième nœud de collecte, la commande comprenant un identifiant du deuxième nœud de collecte,
- émettre (312) en l'absence d'acceptation par le nœud client de la commande de connexion au deuxième nœud de collecte, à destination de chaque nœud de collecte du réseau de communication distribué, sauf le deuxième nœud de collecte, une commande de refus d'association avec le nœud client.

2. Procédé selon la revendication 1, chaque nœud de collecte étant connecté à un même bus de communication, chaque nœud de collecte collectant, pour chaque nœud client connecté audit nœud de collecte, des données qualités.

3. Procédé selon l'une des revendications précédentes, le nœud dit de gestion étant l'un des nœuds de collecte.

4. Procédé selon l'une des revendications précédentes, le réseau de communication sans fil distribué étant conforme à une norme IEEE 802.11.

5. Nœud de gestion (B1, B2, B3, B4) d'un réseau de communication sans fil distribué, le réseau de communication comprenant une pluralité de nœuds de collecte et au moins un nœud client connecté à un premier nœud de collecte, le nœud de gestion comprenant des moyens pour mettre en œuvre les étapes du procédé selon l'une quelconque des revendications précédentes.

6. Procédé selon l'une quelconque des revendications 1 à 4, **caractérisé en ce que**
le procédé comporte en outre les étapes exécutées par un des nœuds de collecte (B1, B2, B3, B4) de :

- recevoir (305), en provenance du nœud dit de gestion, une commande d'activation de détermination d'une donnée qualité associée au nœud client et audit un des nœuds de collecte, la commande comprenant un identifiant du nœud client,
- déterminer la donnée qualité associée au nœud client,
- émettre (306), à destination du nœud de gestion, un message comprenant la donnée qualité associée au nœud client et audit un des nœuds de collecte.

7. Procédé selon la revendication précédente, ledit au moins un des nœuds de collecte comprenant au moins un module radio conforme à une norme IEEE 802.11, déterminer la donnée qualité associée au nœud client comprenant :

- passer le module radio en un mode dit surveillance afin de capturer des trames comprenant l'identifiant du nœud client, et/ou,
- filtrer des trames reçues en fonction de l'identifiant du nœud client, la donnée qualité correspond à une puissance reçue d'un signal radio correspondant aux trames capturées ou reçues.

8. Système (300), pour un réseau de communication sans fil distribué (100) comprenant une pluralité de nœuds de collecte (B1, B2, B3, B4) et au moins un nœud client (C1, C2) connecté à un premier nœud de collecte de la pluralité de nœuds de collecte;

le système comprenant aussi un nœud dit de gestion (B1, B2, B3, B4) selon la revendication 5;
chaque nœud de collecte comporte;

- des moyens pour recevoir (305), en provenance d'un nœud dit de gestion, une commande d'activation de détermination d'une donnée qualité associée au nœud client, la commande comprenant un identifiant du nœud client,
- des moyens pour déterminer la donnée qualité associée au nœud client,
- des moyens pour émettre (306), à destination du nœud dit de gestion, un message comprenant la donnée qualité associée au nœud client et audit chaque nœud de collecte.

9. Programme d'ordinateur, **caractérisé en ce qu'**il comprend des instructions pour mettre en œuvre, par un processeur (401) d'un nœud de gestion (400) d'un réseau de communication sans fil distribué comprenant une pluralité de nœuds de collecte et au moins un nœud client connecté à un premier nœud de collecte, un procédé (200, 300) selon l'une quelconque des revendications 1 à 4, ou 6 et 7, lorsque le programme d'ordinateur est exécuté par le processeur.

10. Support d'enregistrement, lisible par un nœud de gestion d'un réseau de communication sans fil distribué, sur lequel est stocké le programme d'ordinateur selon la revendication précédente.


**Patentansprüche**

1. Verfahren (300) für ein verteiltes drahtloses Kommunikationsnetzwerk (100), das eine Mehrzahl von Sammelknoten (B1, B2, B3, B4) und wenigstens einen Client-Knoten (C1, C2), der mit einem ersten Sammelknoten verbunden ist, umfasst, zur Verwaltung der Verbindung dieses Client-Knotens, wobei das Verfahren von einem Verwaltungsknoten (B1, B2, B3, B4) ausgeführt wird und die folgenden Schritte umfasst:

- Bestimmen (301) eines Verbindungsqualitätsindikators, der dem Client-Knoten zugeordnet ist, wobei der Verbindungsqualitätsindikator für eine Qualität der Verbindung zwischen dem ersten Sammelknoten und dem Client-Knoten repräsentativ ist, wenn der Verbindungsqualitätsindikator größer als ein vorbestimmter Schwellenwert (302) ist, dieser überschrittene Schwellenwert für eine schlechte Qualität der Verbindung repräsentativ ist, dann:
- Senden (303) eines Befehls zur Bestimmung der Qualitätsdaten, die jedem Sammelknoten zugeordnet sind, an den Client-Knoten,
- Senden (305), bei Nichtvorliegen einer Akzeptierung, durch den Client-Knoten, des Befehls zur Bestimmung der Qualitätsdaten, die jedem Sammelknoten zugeordnet sind, eines Befehls zur Aktivierung des Bestimmens eines Qualitätsdatenelements, das dem Client-Knoten und jedem Sammelknoten zugeordnet ist, an jeden Sammelknoten außer den ersten Sammelknoten, wobei der Befehl eine Kennung des Client-Knotens umfasst,
- Empfangen (306), bei Nichtvorliegen einer Akzeptierung, durch den Client-Knoten, des Befehls zur Bestimmung der Qualitätsdaten, die jedem Sammelknoten zugeordnet sind, von jedem Sammelknoten, einer Nachricht, die das Qualitätsdatenelement umfasst, das dem Client-Knoten und jedem Sammelknoten zugeordnet ist,
- Bestimmen (307), für jeden Sammelknoten, eines Qualitätsindikators, der dem Client-Knoten zugeordnet ist, in Abhängigkeit von dem empfangenen Qualitätsdatenelement,
- Auswählen (308) eines zweiten Sammelknotens in Abhängigkeit von den bestimmten Qualitätsindikatoren, und,

**dadurch gekennzeichnet, dass**, wenn der zweite Sammelknoten vom ersten Sammelknoten (309) verschieden ist, dann:

- Senden (310), an den Client-Knoten, eines Befehls zur Verbindung mit dem zweiten Sammelknoten, wobei der Befehl eine Kennung des zweiten Sammelknotens umfasst,

- Senden (312), bei Nichtvorliegen einer Akzeptierung, durch den Client-Knoten, des Befehls zur Verbindung mit dem zweiten Sammelknoten, eines Befehls zur Ablehnung der Zuordnung zum Client-Knoten an jeden Sammelknoten des verteilten Kommunikationsnetzwerks, außer den zweiten Sammelknoten.

2. Verfahren nach Anspruch 1, wobei jeder Sammelknoten mit ein und demselben Kommunikationsbus verbunden ist, wobei jeder Sammelknoten für jeden Client-Knoten, der mit dem Sammelknoten verbunden ist, Qualitätsdaten sammelt.

3. Verfahren nach einem der vorhergehenden Ansprüche, wobei der Verwaltungsknoten einer der Sammelknoten ist.

4. Verfahren nach einem der vorhergehenden Ansprüche, wobei das verteilte drahtlose Kommunikationsnetzwerk einer IEEE-802.11-Norm entspricht.

5. Verwaltungsknoten (B1, B2, B3, B4) eines verteilten drahtlosen Kommunikationsnetzwerks, wobei das Kommunikationsnetzwerk eine Mehrzahl von Sammelknoten und wenigstens einen Client-Knoten, der mit einem ersten Sammelknoten verbunden ist, umfasst, wobei der Verwaltungsknoten Mittel zur Durchführung der Schritte des Verfahrens nach einem der vorhergehenden Ansprüche umfasst.

6. Verfahren nach einem der Ansprüche 1 bis 4, **dadurch gekennzeichnet, dass** das Verfahren ferner die folgenden Schritte umfasst, die von einem der Sammelknoten (B1, B2, B3, B4) ausgeführt werden:

- Empfangen (305), vom Verwaltungsknoten, eines Befehls zur Aktivierung des Bestimmens eines Qualitätsdatenelements, das dem Client-Knoten und dem einen der Sammelknoten zugeordnet ist, wobei der Befehl eine Kennung des Client-Knotens umfasst,
- Bestimmen des Qualitätsdatenelements, das dem Client-Knoten zugeordnet ist,
- Senden (306), an den Verwaltungsknoten, einer Nachricht, die das Qualitätsdatenelement umfasst, das dem Client-Knoten und dem einen der Sammelknoten zugeordnet ist.

7. Verfahren nach dem vorhergehenden Anspruch, wobei, der wenigstens eine der Sammelknoten wenigstens ein Funkmodul umfassend, das einer IEEE-802.11-Norm entspricht, Bestimmen des Qualitätsdatenelements, das dem Client-Knoten zugeordnet ist, Folgendes umfasst:

- Schalten des Funkmoduls in einen Überwachungsmodus, um Frames zu erfassen, die die Kennung des Client-Knotens umfassen, und/oder,
- Filtern der empfangenen Frames in Abhängigkeit von der Kennung des Client-Knotens, wobei das Qualitätsdatenelement einer empfangenen Leistung eines Funksignals entspricht, das den erfassten oder empfangenen Frames entspricht.

8. System (300) für ein verteiltes drahtloses Kommunikationsnetzwerk (100), das eine Mehrzahl von Sammelknoten (B1, B2, B3, B4) und wenigstens einen Client-Knoten (C1, C2), der mit einem ersten Sammelknoten der Mehrzahl von Sammelknoten verbunden ist, umfasst; wobei das System auch einen Verwaltungsknoten (B1, B2, B3, B4) nach Anspruch 5 umfasst;
jeder Sammelknoten Folgendes aufweist;

- Mittel zum Empfangen (305), von einem Verwaltungsknoten, eines Befehls zur Aktivierung des Bestimmens eines Qualitätsdatenelements, das dem Client-Knoten zugeordnet ist, wobei der Befehl eine Kennung des Client-Knotens umfasst,
- Mittel zum Bestimmen des Qualitätsdatenelements, das dem Client-Knoten zugeordnet ist,
- Mittel zum Senden (306), an den Verwaltungsknoten, einer Nachricht, die das Qualitätsdatenelement umfasst, das dem Client-Knoten und jedem Sammelknoten zugeordnet ist.

9. Computerprogramm, **dadurch gekennzeichnet, dass** es Anweisungen umfasst, um durch einen Prozessor (401) eines Verwaltungsknotens (400) eines verteilten drahtlosen Kommunikationsnetzwerks, das eine Mehrzahl von Sammelknoten und wenigstens einen Client-Knoten, der mit einem ersten Sammelknoten verbunden ist, umfasst, ein Verfahren (200, 300) nach einem der Ansprüche 1 bis 4 oder 6 und 7 durchzuführen, wenn das Computerprogramm vom Prozessor ausgeführt wird.

10. Speichermedium, das von einem Verwaltungsknoten eines verteilten drahtlosen Kommunikationsnetzwerks gelesen werden kann, auf dem das Computerprogramm nach dem vorhergehenden Anspruch gespeichert ist.

**Claims**

1. Method (300), for a distributed wireless communication network (100) comprising a plurality of gathering nodes (B1, B2, B3, B4) and at least one client node (C1, C2) connected to a first gathering node, for managing the connection of this client node, the method being executed by a so-called management node (B1, B2, B3, B4) and comprising the steps of:

   - determining (301) a connection quality indicator associated with the client node, the connection quality indicator representing a quality of the connection between the first gathering node and the client node, if the connection quality indicator is higher than a predetermined threshold (302), this exceeded threshold representing a poor quality of the connection, then
   - sending (303), to the client node, a command to determine quality data associated with each gathering node,
   - sending (305), in the absence of acceptance by the client node of the command to determine quality data associated with each gathering node, to each gathering node, except for the first gathering node, a command to activate determination of a quality data item associated with the client node and with each gathering node, the command comprising an identifier of the client node,
   - receiving (306), in the absence of acceptance by the client node of the command to determine quality data associated with each gathering node, coming from each gathering node, a message comprising the quality data item associated with the client node and with said each gathering node,
   - determining (307), for each gathering node, a quality indicator associated with the client node according to the quality data item received,
   - selecting (308) a second gathering node according to the quality indicators determined, and

   **characterised in that**, if the second gathering node is different from the first gathering node (309), then:

   - sending (310), to the client node, a command to connect to the second gathering node, the command comprising an identifier of the second gathering node,
   - sending (312), in the absence of acceptance by the client node of the command to connect to the second gathering node, to each gathering node in the distributed communication network, except for the second gathering node, a command to refuse association with the client node.

2. Method according to claim 1, each gathering node being connected to the same communication bus, each gathering node collecting, for each client node connected to said gathering node, quality data.

3. Method according to one of the preceding claims, the so-called management node being one of the gathering nodes.

4. Method according to one of the preceding claims, the distributed wireless communication network being compliant with an IEEE 802.11 standard.

5. Management node (B1, B2, B3, B4) of a distributed wireless communication network, the communication network comprising a plurality of gathering nodes and at least one client node connected to a first gathering node, the management node comprising means for performing the steps of the method according to any one of the preceding claims.

6. Method according to any one of claims 1 to 4, **characterised in that** the method further comprises the steps, performed by one of the gathering nodes (B1, B2, B3, B4,) of:

   - receiving (305), coming from the management node, a command to activate the determination of a so-called quality data item associated with the client node and with one of the gathering nodes, the command comprising an identifier of the client node,
   - determining the quality data item associated with the client node,
   - sending (306), to the management node, a message comprising the quality data item associated with the client node and with said one of the gathering nodes.

7. Method according to the preceding claim, said at least one of the gathering nodes comprising at least one radio module compliant with an IEEE 802.11 standard, determining the quality data item associated with the client node comprising:

   - changing the radio module to a so-called monitoring mode in order to capture frames comprising the identifier of the client node, and/or
   - filtering frames received according to the identifier of the client node, the quality data item corresponds to a received power of a radio signal corresponding to the frames captured or received.

8. System (300), for a distributed wireless communication network (100) comprising a plurality of gathering nodes (B1, B2, B3, B4) and at least one client node (C1, C2) connected to a first gathering node in the plurality of gathering nodes;

   the system also comprising a so-called management node (B1, B2, B3, B4) according to claim 5;
   each gathering node comprises:

   - means for receiving (305), coming from a so-called management node, a command to activate determination of a quality data item associated with the client node, the command comprising an identifier of the client node,
   - means for determining the quality data item associated with the client node,
   - means for sending (306), to the so-called management node, a message comprising the quality data item associated with the client node and with said each gathering node.

9. Computer program, **characterised in that** it comprises instructions for implementing, by a processor (401) of a management node (400) of a distributed wireless communication network comprising a plurality of gathering nodes and at least one client node connected to a first gathering node, a method (200, 300) according to any one of claims 1 to 4, or 6 and 7, when the computer program is executed by the processor.

10. Recording medium that can be read by a management node of a distributed wireless communication network, on which the computer program according to the preceding claim is stored.

**Fig. 1**

**Fig. 2**

**Fig. 3**

400

401

CPU

404

STCK

402

MEM

405

MOD

403

NET

40N

MODN

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9538446 B
- US 2017135104 A
- WO 2013087894 A1